**Europäisches Patentamt**

**European Patent Office**

**Office européen des brevets**

(19)

(11) Veröffentlichungsnummer: **0 212 413**
A2

# (12) EUROPÄISCHE PATENTANMELDUNG

(21) Anmeldenummer: 86110741.5

(22) Anmeldetag: 04.08.86

(51) Int. Cl.⁴: **C 08 G 18/50,** C 08 G 18/65, C 08 G 18/70, C 08 G 18/79

(30) Priorität: 16.08.85 DE 3529251

(43) Veröffentlichungstag der Anmeldung: 04.03.87 Patentblatt 87/10

(84) Benannte Vertragsstaaten: **AT BE CH DE FR GB IT LI NL SE**

(71) Anmelder: **BAYER AG, Konzernverwaltung RP Patentabteilung, D-5090 Leverkusen 1 Bayerwerk (DE)**

(72) Erfinder: **Hess, Heinrich, Dr., Körnerstrasse 5, D-5090 Leverkusen (DE)**
Erfinder: **Grögler, Gerhard, Dr., von-Diergardt-Strasse 48, D-5090 Leverkusen (DE)**
Erfinder: **Kopp, Richard, Dr., Bilharzstrasse 15, D-5000 Köln 80 (DE)**

(54) Kalthärtende Zusammensetzungen, ein Verfahren zu ihrer Herstellung und ihre Verwendung zur Polyurethanherstellung.

(57) Kalthärtende Zusammensetzungen, die A) bis 85°C lagerstabile Suspensionen fester Polyisocyanate in höhermolekularen aliphatischen Polyaminen mit Molekulargewichten von 400 bis 8000, gegebenenfalls in Anwesenheit von aliphatischen Polyaminen mit Molekulargewichten von 32 bis 399 und/oder untergeordneten Mengen an Polyolen mit Molekulargewichten von 62 bis 8000, wobei die Reaktivität des Polyisocyanats durch Einwirkung der oben genannten, als «Desaktivatoren» wirksamen Polyamine und/oder durch Einwirkung von Hydrazingruppen, Amidingruppen und/oder Guanidingruppen aufweisenden Verbindungen in einer Menge von 0,1 bis 25 Äquivalent-% Amin, Hydrazin, Alkylhydrazinen, Guanidinen oder Amidinen oder ihren Mischungen pro NCO, herabgesetzt worden ist, und B) Polyhydroxylverbindungen mit Molekulargewichten von 62 bis 8000, und/oder Wasser und gegebenenfalls aliphatische Polyamine mit Molekulargewichten von 32 bis 8000, enthalten, werden zur Herstellung von Polyurethanen durch Aushärten bei Temperaturen zwischen 0–50°C, vorzugsweise Raumtemperatur, gegebenenfalls unter Formgebung verwendet.

BAYER AKTIENGESELLSCHAFT          5090 Leverkusen, Bayerwerk

Konzernverwaltung RP

Patentabteilung                   OER/by-c

## Kalthärtende Zusammensetzungen, ein Verfahren zu ihrer Herstellung und ihre Verwendung zur Polyurethanherstellung

Die Erfindung betrifft kalthärtende Zusammensetzungen aus a) Suspensionen (Komponente A) von durch Polyadduktumhüllung lagerstabilen, festen Polyisocyanaten retardierter Reaktivität in höhermolekularen aliphatischen Polyaminen und b) Polyolen und/oder (weniger bevorzugt) Wasser (Komponente B). Die Aktivierung der Zusammensetzung wird hierbei durch das Polyol bzw. Wasser hervorgerufen. Gegebenenfalls können zur Aushärtung zusätzlich aktivierend wirkende Stoffe zugesetzt werden.

Derartige, schon bei Umgebungstemperatur aushärtende Zusammensetzungen sind aus lagerstabilen Komponenten (A) und (B) leicht herstellbar, besitzen zur Verarbeitung eine lange Topfzeit und eine im Verhältnis zur Topfzeit sehr kurze Aushärtezeit zum endgültigen Reaktionsprodukt.

Bei Raumtemperatur oder leicht erhöhter Temperatur abreagierende Zweikomponenten-Polyurethan-Polyharnstoff-Gießsysteme (im folgenden abgekürzt als "PUR-Gießsysteme") mit nach Wunsch beliebig lang einstellbarer Topfzeit

Le A 24 002-Ausland

(Gießzeit) und dennoch rascher Endverfestigung (griff- und trittfest, oberflächlich trocken) nach eingetretenem Verfestigungsbeginn sind bisher nicht bekannt. Die bisher beschriebenen Langtopfzeit-Systeme mit "Kalthärtung" besitzen alle den Nachteil, daß entweder die Gießzeit nicht über 20-30 min liegt oder die Endverfestigung sich über Tage hinweg erstreckt.

Aufgabe der vorliegenden Erfindung war es daher, ein 2-Komponenten-PUR-Gießsystem zu finden, welches dem Idealbild des kalthärtenden Zweikomponenten-PUR-Gießsystems möglichst nahe kommt: Lange bzw. beliebig einstellbare Topfzeit (Gießzeit) bei Raumtemperatur, Abbindezeit nur unwesentlich länger als die Topfzeit.

Die Herstellung von bei Raumtemperatur lagerstabilen, aber hitzehärtbaren Suspensionen aus einem festen, feinverteilt vorliegenden Polyisocyanat, das durch teilweise chemische Reaktion an der Kornoberfläche, bevorzugt mit aliphatischen Polyaminen, unter Bildung einer Polyharnstoff-Polymerschutzhülle desaktiviert ist, und in mindestens einer mit Isocyanatgruppen reaktionsfähigen Verbindung, z.B. höhermolekularen Polyolen und/oder Polyaminen suspendiert ist, ist bekannt. Insbesondere werden nach der DE-OS 3 112 054 und DE-OS 3 230 757/EP-A 103 323 durch Reaktion mit z.B. Polyaminen, Hydrazin(en) oder Hydra-zidverbindungen mit -CO.NH.NH$_2$-Endgruppen gebildete mittels Umhüllung mit Polyadditionsprodukten stabilisierte, feste Polyisocyanate mit einer retardierten Reaktivität hergestellt, wobei die Umhüllung im wesentlichen aus Polyadditionsprodukten in dünner Schicht und in nur untergeordneter Abreaktion derNCO- Gruppen (0,1 bis 25 %) an der Oberfläche der festen Isocyanatteilchen

Le A 24 002

mit den Amin-Stabilisatoren gebildet wird. Durch die Stabilisierung mittels Polyadduktumhüllung werden Polyisocyanatteilchen erhalten, welche in den PU-Einkomponenten-Reaktivsystemen, d.h. als Suspension in Gegenwart von höhermolekularen Polyolen und/oder höhermolekularen Polyaminen, gegebenenfalls unter Zusatz von niedermolekularen Polyolen oder (aromatischen) Polyaminen, erst oberhalb einer bestimmten Temperatur als Polyisocyanate in Reaktion treten, unterhalb dieser Temperatur jedoch lagerstabile Reaktivsysteme darstellen.

In den bekannten Einkomponenten-PUR-Gießmassen sind die Isocyanate und Isocyanat-reaktiven Komponenten im für die Herstellung der fertigen PUR-Kunststoffe bereits richtigen Mengenverhältnis enthalten. Die ausgehärteten Polyurethane werden durch einfaches Erhitzen der beliebig lange lagerfähigen Einkomponenten-Gießmischungen auf Temperaturen von 70-180°C, bevorzugt 100-130°C hergestellt. Die Mischungen sind bei Raumtemperatur oder leicht erhöhter Temperatur lagerbeständig, d.h. sie gehen keine nachweisbare Reaktion an den freien NCO-Gruppen ein. Dementsprechend finden sich in der genannten Vorliteratur keine Hinweise auf eine Kalthärtung der dort beschriebenen Einkomponenten-PUR-Gießmassen, ausgenommen natürlich die Kalthärtung durch unzureichende Stabilisierung bei der Herstellung der Einkomponenten-PUR-Gießmischungen, die aber dann nicht mehr als echte Einkomponenten-PUR-Gießmischungen zu betrachten sind. Als kalthärtende Zwei-Komponenten-PUR-Gießmischungen sind solche unzureichend stabilisierten Einkomponenten-PUR-Gießmischungen ebenfalls nicht zu bezeichnen, da sie am Ort der Anwendung erst un-

Le A 24 002

mittelbar vor dem Einsatz hergestellt werden könnten, und die homogene Vermischung von festen, feinpulverigen Isocyanaten mit Polyol/Polyamin-Komponenten besondere Mischaggregate erfordert, die vor Ort, vor allem unter freiem Himmel nicht überall zur Verfügung stehen. Die Problematik der Zwei-Komponenten-Polyurethan-Misch-Technik ist also durch die inpraktikable Verwendung unzureichend stabilisierter Einkomponentensysteme der beschriebenen Art nicht zu lösen.

Es wurde nun überraschend gefunden, daß die thermische Stabilität der in den genannten Offenlegungsschriften beschriebenen Einkomponenten-PUR-Gießmischungen gegen Polyadditionsreaktion von -NCO mit -OH/NH$_2$ in bestimmten Fällen durch Zusatz von OH-Gruppen enthaltenden, NCO-reaktiven Komponenten (Polyole) bzw. Wasser soweit herabgesetzt werden kann, daß schon bei Raumtemperatur nach einer Zeit, die durch Art und Menge des zugesetzten Polyols bestimmt wird und zwischen wenigen Minuten und einigen Tagen einstellbar ist, spontane Verfestigung eintritt. Diese Kalthärtung durch Polyolzusatz läßt sich in denjenigen Fällen erzielen, wo das Suspendiermedium der feinteiligen Polyisocyanate (überwiegend) aus höhermolekularen, aliphatischen Polyaminen besteht und wo derartige Suspensionen nicht zu stark desaktivierte, feste Polyisocyanate enthalten (Lagerstabilität bis 85°C, d.h. bei Prüfung auf der Koflerbank bis 85°C während 15 Minuten flüssig bleibend und nicht in ein Elastomer übergehend).

Zusätzlich üben die in der Polyurethantechnologie üblichen Zusatzmittel wie Katalysatoren, Pigmente, anorganische Füllstoffe, Thixotropierungsmittel wie z.B. Bentonite,

Le A 24 002

oder feinverteiltes Siliciumdioxid sowie Viskositätsverminderer (Lösungsmittel) wie z. B. Propylencarbonat im
allgemeinen einen die Kalthärtung der erfindungsgemäßen
Zusammensetzungen zusätzlich beschleunigenden Einfluß
aus.

Die Kaltverfestigung zu einem elastischen, klebfreien,
griff- und trittfesten Polyurethan durchläuft nur eine
relativ kurzzeitige (zwischen 5 und 30 min) Zeitspanne,
in der sich die Masse in einem hochviskos-plastischen
Zustand mit klebriger Oberfläche befindet. Die Verfestigungs- bzw. Abbindezeiten und Gießzeiten liegen also nahe
beieinander. Eine Verlangsamung der Härtungsgeschwindigkeit ist zu keinem Zeitpunkt der Verfestigungsphase und
auch nicht an Stellen hoher Wärmeableitung, z.B. in
dünneren Schichten und im Kontakt mit Metall-Teilen zu
beobachten. Dies ist damit zu erklären, daß die Verfestigung nicht thermisch, sondern durch Diffusion des Polyols
in das Isocyanat-Korn initiiert wird.

Eine durchaus erwünschte Folge der an der Grenzfläche
Zusammensetzung/Luft sogar zuerst einsetzenden Kaltverfestigung ist, daß z.B. Beschichtungen an den dünnsten
Stellen zuerst durchhärten oder zumindest nicht langsamer
abbinden als an Orten höherer Schichtdicke. Erfindungsgemäß hergestellte Beschichtungen haben auch dann schon
äußerlich abgebunden, wenn im Inneren der Elastomermasse
noch einzelne, nicht verfestigte Flüssigkeitsnester vorhanden sind. Bei herkömmlichen "Langtopfzeit"-Systemen des
Standes der Technik bleibt dagegen bei unbeabsichtigt zu
lang eingestellter Topfzeit die Oberfläche klebrig und
härtet nur sehr langsam nach, während die erfindungsge-

Le A 24 002

mäßen Langtopfzeit-Zweikomponenten-Systeme bei unbeabsichtigt zu lang eingestellter Topfzeit zwar etwas länger zum vollständigen Durchhärten brauchen, die Qualität der Oberfläche von der tatsächlichen Topfzeit jedoch unbeeinflußt bleibt. Nach der ausführlich beschriebenen und aus dem gießfähigen Zustand heraus sehr schnell erfolgten Verfestigung findet eine zeitlich begrenzte Nachhärtung statt, deren Geschwindigkeit von der Umgebungstemperatur abhängt.

Die Topfzeiten der erfindungsgemäßen kalthärtenden Zusammensetzungen hängen selbstverständlich auch von der thermischen Stabilität der eingesetzten Isocyanat-Suspension ab. Hohe thermische Stabilität wird eine lange Topfzeit verursachen; niedrige thermische Stabilität wird dagegen eine kurze Topfzeit verursachen.

Die erfindungsgemäß in Frage kommenden Isocyanat-Suspensionen (Komponente A)) sind daher in der Regel bis 85°C lagerstabil.

Gegenstand der Erfindung sind kalthärtende Zusammensetzungen, enthaltend A) bis 85°C lagerstabile Suspensione fester Polyisocyanate in höhermolekularen aliphatischen Polyaminen mit Molekulargewichten von 400 bis 8000, gegebenenfalls in Anwesenheit von aliphatischen Polyaminen mit Molekulargewichten von 32 bis 399 als Desaktivatoren und/oder untergeordneten Mengen an Polyolen mit Molekulargewichten von 62 bis 8000, wobei die Reaktivität des Polyisocyanats durch Einwirkung der oben genannten, als "Desaktivatoren" wirksamen Polyamine und/oder durch Einwirkung von Hydrazingruppen aufweisenden Verbindungen und/oder

Le A 24 002

Amidinen und/oder Guanidinen, in einer Menge von 0,1 bis 25 Äquivalent-% Amin, Hydrazin, Alkylhydrazinen, Hydrazidverbindungen, Guanidinen oder Amidinen oder ihren Mischungen pro NCO, herabgesetzt worden ist, und B) Polyhydroxylverbindungen mit Molekulargewichten von 62 bis 8000, und/oder Wasser und gegebenenfalls aliphatische Polyamine vom Molekulargewicht 32-8000 sowie gegebenenfalls zusätzliche, aktivierend wirkende Stoffe.

Als feste, feinteilige Polyisocyanate kommen solche in Betracht, wie sie in der EP-A-103 323 aufgeführt sind. Erfindungsgemäß bevorzugt sind solche Zusammensetzungen, in denen die Komponente A) eine Suspension eines desaktivierten dimeren Toluylendiisocyanats oder eines desaktivierten 3,3'-Diisocyanato-4.4'-dimethyl-N,N'-diphenylharn-stoffs darstellt.

Bevorzugt sind ferner solche Zusammensetzungen, in denen die Komponente B) eine Polyhydroxylverbindung vom Molekulargewicht 62 bis 1000 oder ein OH-Prepolymer auf Basis von mindestens bifunktionellen Verbindungen mit gegenüber NCO reaktiven Gruppen und unterschüssigen molaren Mengen an Di- und/oder Polyisocyanaten darstellt.

Vorzugsweise enthält in den Zusammensetzungen die Komponente B) zusätzlich Feststoff-Adsorbentien, vorzugsweise Zeolithe, feinverteilte Kieselsäure, anorganische Pigmente oder Bentonite, übliche Füllstoffe, vorzugsweise Kreide oder Tonerde, übliche PUR-Katalysatoren oder Lösungsmittel. Die PUR-Katalysatoren können vorzugsweise auch in der Komponente B) enthalten sein.

Le A 24 002

0212413

Erfindungsgemäß bevorzugt sind auch Zusammensetzungen, in denen in den Komponenten A) und B) die Isocyanate und die Amine bzw. Polyole in solchen Mengen enthalten sind, daß eine NCO-Kennzahl von 50 bis 200, vorzugsweise 90 bis 135 eingehalten wird.

Gegenstand der Erfindung ist ferner ein Verfahren zur Herstellung von kalthärtenden Zusammensetzungen, dadurch gekennzeichnet, daß man

A)   bis 85°C lagerstabilen Suspensionen fester Polyisocyanate in höhermolekularen aliphatischen Polyaminen mit Molekulargewichten von 400 bis 8000, gegebenenfalls in Anwesenheit von aliphatischen Polyaminen mit Molekulargewichten von 32 bis 399 und/oder untergeordneten Mengen an Polyolen mit Molekulargewichten von 62 bis 8000, wobei die Reaktivität des Polyisocyanats durch Einwirkung der oben genannten, als "Desaktivatoren" wirksamen Polyamine und/oder durch Einwirkung von Hydrazingruppen aufweisenden Verbindungen und/oder Amidinen und/oder Guanidinen, in einer Menge von 0,1 bis 25 Äquivalent-% Amin, Hydrazin, Alkylhydrazinen, Guanidinen oder Amidinen oder ihren Mischungen pro NCO, herabgesetzt worden ist,

B)   Polyhydroxylverbindungen mit Molekulargewichten von 62 bis 8000 und/oder Wasser und gegebenenfalls aliphatische Polyamine vom Molekulargewicht 32-8000 und gegebenenfalls zusätzliche aktivierend wirkende Stoffe bei Temperaturen unterhalb der Schmelztemperatur der Polyisocyanate, bevorzugt bei Temperaturen zwischen 0 und 50°C

Le A 24 002

zusetzt.

Die Erfindung betrifft auch die Verwendung der kalthärtenden Zusammensetzungen zur Herstellung von Polyurethanen durch Aushärten bei Temperaturen zwischen 0-50°C, vorzugsweise Raumtemperatur, gegebenenfalls unter Formgebung.

Zur Herstellung der erfindungsgemäßen Zusammensetzungen stellt man als Komponente A) eine Isocyanat-Suspension, (vorzugsweise eine Paste) her, die gegenüber dem NCO-re-aktiven Suspendiermedium (dem höhermolekularen, alipha-tischen Polyamin) einen molaren Überschuß eines festen, feinteiligen, desaktivierten (stabilisierten) Polyisocyanats enthält.

Die Höhe des Isocyanat-Überschusses richtet sich nach dem mittleren Molekulargewicht und der Menge des als B) zur Kalthärtung zuzusetzenden Polyols.

Sinnvollerweise liegt der Isocyanat-Überschuß zwischen dem 1,5- und 30-fachen, bevorzugt zwischen dem 2- und 20-fachen der Menge Äquivalente NCO-reaktiver Gruppen des Suspendiermediums (höhermolekulare aliphatische Polyamine).

Als feste Polyisocyanate kommen erfindungsgemäß solche in Frage, die einen Schmelzpunkt über 40°C, vorzugsweise über 80°C aufweisen, z. B. 1,5-Naphthalin-diisocyanat, dimeres 4,4'-Diisocyanatodiphenylmethan, dimeres 2,4-Diisocyanatotoluol und 3,3'-Diisocyanato-4,4'-dimethyl-N,N'-diphenyl-harnstoff.

Le A 24 002

Diese Polyisocyanate können durch Einwirkung der nachstehend näher erläuterten aliphatischen Polyamine vom Molekulargewicht 400 bis 8000 und gegebenenfalls durch Einwirkung der aliphatischen Polyamine vom Molekulargewicht 32-399 und/oder anderer Desaktivierungsmittel "desaktiviert" (stabilisiert) worden sein.

Als Desaktivierungsmittel kommen z. B. ferner in Frage: Hydrazin, zumeist in Form von Hydrazinhydrat, $C_1$-$C_6$-alkyl-substituierte Hydrazine, z. B. Methylhydrazin, Ethylhydrazin, Hydroxyethyl-hydrazin oder N,N'-Dimethylhydrazin, Verbindungen mit Hydrazid-Endgruppen, z. B. Di- oder Polyhydrazide wie Carbodihydrazid, Hydracrylsäurehydrazid, Oxalsäuredihydrazid, Adipinsäuredihydrazid, Terephthalsäuredihydrazid, Isophthalsäuredihydrazid oder Verbindungen mit Hydrazid- und Semicarbazid-, Carbazinester- oder Aminogruppen, z. B. β-Semicarbazidopropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bis-semicarbazid oder Isophoron-bis-semicarbazid.

Als Isocyanat-Desaktivatoren wirksam sind auch offenkettige, mono- oder bicyclische Amidine bzw. Guanidine, welche keine gegenüber Isocyanaten reaktiven Wasserstoffatome aufweisen. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]non-5-en.

Le A 24 002

Die Desaktivierung der festen Polyisocyanate kann bei der Herstellung der erfindungsgemäßen Komponente A in situ erfolgen; es ist aber auch möglich, daß zur Herstellung der erfindungsgemäßen Komponente A bereits - in bekannter Weise - desaktivierte Polyisocyanate eingesetzt werden.

Als Suspendiermedium für die desaktivierten festen Polyisocyanate werden höhermolekulare aliphatische Polyamine mit Molekulargewichten von 400 bis 8000 verwendet, z. B. bei Raumtemperatur fließfähige Polyamine mit aliphatischen Aminogruppen und Molekulargewichten von 400 bis 8000, vorzugsweise 500 bis 6000, eingesetzt, wie sie z. B. durch reduktive Aminierung von Polyoxyalkylenglykolen mit Ammoniak nach BE-PS 634 741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-OS 2 546 536. Geeignete höhermolekulare aliphatische Di- und Polyamine sind auch die nach DE-OS 29 48 419, DE-OS 3 039 600, DE-OS 3 112 118, der EP-A 61 627, EP-A 71 132 und EP-A 71 139 durch alkalische Hydrolyse von NCO-Prepolymeren (mit aliphatischen Diisocyanaten) mit Basen über die Carbamatstufe zugänglichen Polyamine. Diese Polyamine besitzen Mole-

Le A 24 002

kulargewichte von 400 bis 8000, vorzugsweise 500 bis 6000 und besonders bevorzugt von 1000 bis 3000.

Es handelt sich bei dem Verfahren nach DE-OS 2 948 419 und den anderen zitierten Literaturstellen vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die höhermolekularen Polyamine können jedoch auch nach anderen Verfahren, z. B. durch Umsetzung von NCO-Prepolymeren mit überschüssigen Mengen an Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung.

Als Suspendiermedium/Desaktivierungsmittel werden gegebenenfalls zusätzlich auch aliphatische Polyamine, einschließlich Hydrazine oder Hydrazinderivate, sowie Amidine und Guanidine vom Molekulargewicht 32-399 oder untergeordnete Mengen an Polyolen vom Molekulargewicht 62-8000 verwendet.

Als aliphatische Polyamine vom Molekulargewicht 32-399 kommen z. B. in Frage: Ethylendiamin, Propylendiamin, Hexan-1,6-diamin, 2,2,4-Trimethyl-1,6-diaminohexan, 2,5-Dimethyl-2,5-diaminohexan, 1,10-Decandiamin, 1,11-Undecandiamin, 1,12-Dodecandiamin, Bis-aminomethyl-hexahydro-4,7-methano-indan (TCD-Diamin), 1,3-Cyclohexandiamin, 1,4-Cyclohexandiamin, 1-Amino-3,3,5-trimethyl-5-aminomethyl-cyclohexan (Isophorondiamin), 2,4- und/oder 2,6-Hexahydrotoluylendiamin, 2,4'- und/oder 4,4'-Diaminodicyclohexylmethan, m- oder p-Xylylendiamin, 2-(5-Aminopentyl)-aza-cycloheptan, Bis-(3-aminopropyl)-methylamin, Bis-N,N'-(3-aminopropyl)-piperazin und 1-Amino-2-aminomethyl-3,3,5-(3,5,5)-trimethylcyclopentan, 2,2-Dialkylpentan-1,5-diamine oder Triamine wie 1,5,11-, oder 1,6,11-Triaminoundecan, 4-Aminomethyl-1,8-diaminooctan, Lysinmethylester, cycloaliphatische Triamine gemäß DE-OS 2 614 244, 4,7-Dioxadecan-1,10-diamin, 2,4- und 2,6-Diamino-3,5-diethyl-1-methylcyclohexan und deren Gemische, alkylierte Diaminodicyclohexylmethane, z. B. 3,3'-Dimethyl-4,4'-diaminodicyclohexylmethan oder 3,5-Diisopropyl-3', 5'-diethyl-4,4'-diaminodicyclohexylmethan, perhydrierte Diamino-naphthaline, perhydrierte Diaminoanthrazene oder höher-wertige Amine wie Diethylentriamin, Triethylentetramin, Pentaethylenhexamin, Dipropylentriamin, Tripropylentetramin oder N,N'-Dimethyl-ethylendiamin, 2,5-Dimethylpiperazin, 2-Methylpiperazin, Piperazin(hydrat) und 2-Hydroxyethylpiperazin. Ferner sind einsetzbar: Hydrazin, zumeist in Form von Hydrazinhydrat, $C_1$-$C_6$-alkylsubstituierte Hydrazine, z. B. Methylhydrazin, Ethylhydrazin, Hydroxyethyl-hydrazin oder N,N'-Dimethylhydrazin.

Als Polyole vom Molekulargewicht 62-8000 seien beispielsweise genannt: Mindestens zwei, vorzugsweise 2 bis 4, Hydroxylgruppen und in der Regel ein Molekulargewicht von 400-8000 aufweisende Polyester, Polyether, Polythioether, Polyacetale, Polycarbonate und Polyesteramide, wie sie für die Herstellung von homogenen und von zellförmigen Poly

Le A 24 002

urethanen an sich bekannt sind. Beispiele hierfür sind z.B. ausführlich in der DE-OS 2 920 501 und der DE-OS 2 854 384 aufgeführt. Die Polyole werden in der Komponente A gegebenenfalls in lediglich untergeordneten Mengen, d.h. $<0,5$ Äquivalente Hydroxylgruppen pro 1 Äquivalent $NH_2$-Gruppen der höhermolekularen aliphatischen Polyamine des Suspendiermediums, mitverwendet, da sie andernfalls die Lagerstabilität der Komponente A) bereits beeinflussen.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren, Polycarbonsäureanhydriden oder Polycarbonsäureestern von niedrigen Alkoholen. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Tri-

<u>Le A 24 002</u>

methylolpropan, Hexantriol-(1,2,6), Butantriol-(1,2,4),
Trimethylolethan, Pentaerythrit, Chinit,
Mannit und Sorbit, 1,4,3,6-Dianhydrohexite, Methylglykosid, ferner Di-, Tri-, Tetra- und Polyethylenglykol,
Di-, Tri-, Tetra- und Polypropylenglykol, Di-, Tri-,
Tetra- und Polybutylenglykol in Frage. Die Polyester
können anteilig endständige Carboxylgruppen aufweisen.

Auch Polyester aus Lactonen, z.B. ε-Caprolacton oder
Hydroxycarbonsäuren, z.B. ω-Hydroxycapronsäure, sind
einsetzbar.

Auch die erfindungsgemäß in Frage kommenden, mindestens
zwei, in der Regel zwei bis acht, vorzugsweise zwei bis
drei, Hydroxylgruppen aufweisenden Polyether sind solche
der an sich bekannten Art und werden z.B. durch Polymerisation von Tetrahydrofuran und/oder Epoxiden wie Ethylenoxid, Propylenoxid, Butylenoxid, Styroloxid oder Epichlorhydrin mit sich selbst, z.B. in Gegenwart von $BF_3$, oder
durch Anlagerung dieser Epoxide, gegebenenfalls im Gemisch
oder nacheinander, an Startkomponenten mit reaktionsfähigen Wasserstoffatomen wie Wasser, Alkohole, Aminoalkohole, Amine, Zucker u.a., bekannte Startkomponenten,
z.B. Ethylenglykol, Propylenglykol-(1,3) oder -(1,2),
Trimethylolpropan, 4,4'-Dihydroxydiphenylpropan, Anilin,
Ammoniak, Ethanolamin oder Ethylendiamin hergestellt. Auch
Sucrosepolyether, wie sie z.B. in den DE-AS 1 176 358 und
1 064 938 beschrieben werden, kommen erfindungsgemäß in
Frage. Beispiele sind höhermolekulare Polyoxyalkylenpolyole, z.B. Polyoxytetramethylenglykole oder Ethoxylierungs- und/oder Propoxylierungsprodukte von niedermolekularen Di- und Polyolen oder Di- und Polyaminen, z.B.

propoxyliertes Trimethylolpropan, propoxyliertes Ethylendiamin oder lineare oder verzweigte Polypropylenglykolether, die anteilsweise in statistischer, blockartiger
oder endständiger Form Ethylenoxid enthalten können und
insgesamt Molekulargewichte von 400 bis 8 000, vorzugsweise 600 bis 6000, aufweisen. Auch durch Vinylpolymerisate modifizierte Polyether, wie sie z.B. durch Polymerisation von Styrol und Acrylnitril in Gegenwart von
Polyethern entstehen (US-PSen 3 383 351, 3 304 273,
3 523 093, 3 110 695, DE-PS 1 152 536), sind geeignet,
ebenso OH-Gruppen aufweisende Polybutadiene.

Unter den Polythioethern seien insbesondere die Kondensationsprodukte von Thiodiglykol mit sich selbst und/oder
mit anderen Glykolen, Dicarbonsäuren, Formaldehyd, Aminocarbonsäuren oder Aminoalkoholen angeführt.

Als Polyacetale kommen z.B. die aus Glykolen, wie Diethylenglykol, Triethylenglykol, 4,4'-Dioxethyoxy-diphenyldimethylmethan, Hexandiol und Formaldehyd herstellbaren
Verbindungen in Frage. Auch durch Polymerisation cyclischer Acetale lassen sich geeignete Polyacetale herstellen.

Als Hydroxylgruppen aufweisende Polycarbonate kommen
solche der an sich bekannten Art in Betracht, die z.B.
durch Umsetzung von Diolen wie Propandiol-(1,3), Butan-
diol-(1,4) und/oder Hexandiol-(1,6), Di-, Tri- oder Tetraethylenglykol mit Diarylcarbonaten, z.B. Diphenylcarbonat,
oder mit Phosgen hergestellt werden können.

Le A 24 002

Auch bereits Urethan- oder Harnstoffgruppen enthaltende Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Auch Hydroxylendgruppen aufweisende Polybutadiene sind erfindungsgemäß geeignet, da sie besonders elastische und hydrolysenstabile Produkte ergeben. Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Polyadduкthaltige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden, Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

<u>Le A 24 002</u>

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Selbstverständlich können Mischungen der obengenannten Verbindungen mit mindestens zwei gegenüber Isocyanaten reaktionsfähigen Wasserstoffatomen, z.B. Mischungen von Polyethern und Polyestern, eingesetzt werden.

Als in den Suspensionen A) gegebenenfalls enthaltene Polyole kommen auch niedermolekulare Kettenverlängerer oder Vernetzer in Frage. Bei diesen Kettenverlängerern oder Vernetzern handelt es sich insbesondere um mindestens zwei funktionelle Verbindungen, welche an aliphatische und/oder cycloaliphatische Gruppen gebundene Hydroxylgruppen und Molekulargewichte zwischen 62 und 399 aufweisen. Bevorzugt sind dabei niedermolekulare Diole mit an aliphatische oder cycloaliphatische Gruppen gebundenen Hydroxylgruppen des Molekulargewichtsbereichs 108 bis 399.

Le A 24 002

0212413

Diese Verbindungen weisen in der Regel 2 bis 8, vorzugsweise 2 bis 4, besonders bevorzugt jedoch 2, Hydroxylgruppen auf. Es können selbstverständlich auch Mischungen von
verschiedenen Verbindungen verwendet werden. Als Beispiele
für derartige Verbindungen seien genannt: Ethylenglykol,
Diethylenglykol, Triethylenglykol, Tetraethylenglykol,
Trimethylenglykol, Butandiol-2,3 und/oder -1,4, Pentandiol-2,5, Hexandiol-1,6, Neopentylglykol, 1,4-Bis-hydroxyethyl-cyclohexan, 1,4-Dihydroxycyclohexan, Terephthal-
säure-bis(β-hydroxyethyl)ester, 1,4,3,6-Dianhydrohexite,
1,4-Monoanhydrotetrite, Propylenglykol, Dipropylenglykol,
Tripropylenglykol, Tetrapropylenglykol, Bis-2-hydroxyethyl-hydrochinon, Bis-(2-hydroxyethyl)-resorcin. Als
mehrwertige Verbindungen seien genannt: Trimethylolpropan,
Trimethylolethan, Hexantriol-1,2,6, Glycerin, Pentaerythrit, Chinit, Mannit, Sorbit, Rizinusöl sowie Formose
oder Formit.

Ferner sind geeignet tertiäraminhaltige Di- oder Polyole,
z.B. N-Methyldiethanolamin, Triethanolamin oder N,N'-Bis-
hydroxyethylpiperazin.

Die als Suspendiermedium für das feste Isocyanat verwendeten, obengenannten Polyamine (und gegebenenfalls untergeordneten Mengen an Polyolen) können gegebenenfalls durch
Vorreaktion mit einem Unterschuß Polyisocyanat modifiziert
worden sein. Als Polyisocyanate hierfür kommen aliphatische, cycloaliphatische, araliphatische, aromatische
und/oder heterocyclische Polyisocyanate in Betracht, wie
sie z. B. in der DE-OS 2 920 501 (S. 12 bis 16) aufgeführt
sind. Besonders bevorzugt werden dazu in der Regel die

Le A 24 002

technisch leicht zugänglichen Polyisocyanate, z. B. das 2,4-und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4'- und/oder 2,4'-Diphenylmethan-4,4'-diisocyanat, 1,6-Hexamethylendiisocyanat, 1-Isocyanato-3,3,5-trimethyl-5-isocyanatomethyl-cyclohexan, Perhydro-2,4'-und/oder -4,4'-diphenylmethan-diisocyanat, verwendet.

Als Komponente B), die die thermische Stabilität der Isocyanatgruppen im Überschuß enthaltenden Isocyanat-Suspension A) herabsetzt und eine Kalthärtung der Zusammensetzung bewirkt, werden die bereits oben im einzelnen genannten Polyole (bevorzugt Polyetherpolyole und/oder Glykol-Kettenverlängerer) des Molekulargewichtsbereichs 62-8000, bevorzugt 62-1000, verwendet, die gegebenenfalls z. B. durch Vorreaktion mit einem Unterschluß Polyisocyanat modifiziert sein können.

Das Gewichtsverhältnis von Isocyanat-Suspension A) zu Härter-Komponente B) liegt im allgemeinen zwischen 1/0,03 und 1/5, bevorzugt zwischen 1/0,1 und 1/1.

Komponente B) bringt vorzugsweise die zur PUR-Bildung stöchiometrisch notwendige Restmenge an NCO-reaktiven Stoffen mit, so daß sich eine Kennzahl (Verhältnis NCO-Äquivalente zu Äquivalenten an NCO-reaktiven Stoffen x 100) von 50 bis 200, vorzugsweise 90 bis 135 einstellt.

Ferner kommt als Komponente B) auch Wasser in Frage. Wasser ist als alleinige Komponente B) weniger bevorzugt, kann für langsam härtende Systeme evtl. auch als Luftfeuchtigkeit vorhanden sein. Es sind auch Mischungen aus (wassermischbaren) Polyolen und Wasser einsetzbar, doch tritt hierbei in den meisten Fällen eine Blasenbildung ein, die zumeist unerwünscht ist.

Die Komponente B) kann, z. B. zur Verminderung der aktivierenden Wirkung der Polyole oder zur Einstellung eines bestimmten Verhältnisses A) zu B), von 0 bis 50 Gew.-%, bevorzugt bis 10 Äquivalent-% aliphatische Polyamine vom Molekulargewicht 32-8000, wie sie bereits oben als gegebenenfalls mitzuverwendendes Suspendiermittel/Desaktivierungsmittel für die Komponente A) im einzelnen genannt werden, enthalten. Auch können die anderen, bereits aufge führten Desaktivierungsmittel in den genannten Mengengrenzen verwendet werden.

Als gegebenenfalls in der Komponente B) enthaltene Katalysatoren können die üblichen Polyurethankatalysatoren, mit besonders gutem Effekt tertiäre Amine oder Metallkatalysatoren, verwendet werden.

Es sind dies z. B. tertiäre Amine, wie Triethylamin, Tributylamin, N,N,N',N'-Tetramethyl-ethylendiamin, 1,4-Diaza- bicyclo-(2,2,2)-octan, N,N-Dimethylbenzylamin, N,N-Dimethylcyclohexylamin.

Als organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-acetat, Zinn(II)-ethylhexoat und Zinn(II)-laurat und die Dialkylzinnsalze von Carbonsäuren, wie z. B. Dibutyl-zinndiacetat, Dibutylzinn-dilaurat, Dibutylzinn-maleat oder Dioctylzinndiacetat in Betracht.

Le A 24 002

Als organische Bleiverbindungen kommen vorzugsweise Blei(II)-salze von Carbonsäuren wie Blei(II)-naphtenat, Blei(II)-ethylhexoat, Blei(II)-laurat, Blei(II)-stearat, aber auch z. B. Blei(II)-bis-diethyldithiocarbamat oder das Pb(II)-Salz des 3-Mercapto-1,2,4-Triazols in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der EP-A 3 230 757 beschrieben.

Die Katalysatoren werden in der Regel in einer Menge zwischen etwa 0,001 und 10 Gew.-%, bezogen auf die Gesamtzusammensetzung eingesetzt.

Als gegebenenfalls vorzugsweise in Komponente B) enthaltene Hilfs- und Zusatzstoffe seien genannt: Farbstoffe oder Pigmente, Füllstoffe wie Silicagel, Gips, Talkum, Aktivkohle, Metallpulver, UV-Absorptionsmittel oder Stabilisatoren wie phenolische Antioxidantien, Lichtschutzmittel, Treibmittel, oberflächenaktive Zusatzstoffe wie Emulgatoren oder Schaumstabilisatoren, gegebenenfalls Zellregler, Antiblockmittel, Silikone, Flammschutzmittel, oder fungistatisch und/oder bakteriostatisch wirkende Substanzen.

Als Füllstoffe sind z.B. Fasermaterialien, d.h. alle an sich bekannten, faserförmigen Verstärkungsmaterialien einsetzbar, z.B. Glasfasern, Graphitfasern und Asbestfasern oder Fasermaterialien, die von einem organischen

Le A 24 002

Polymeren stammen, z.B. von einem Polyester wie Polyethylenterephthalat, oder vorzugsweise aromatischen Polyamiden, wie dem m-Phenylen-/Isophthalsäurepolyamid, oder dem Poly-p-phenylen-terephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Sollen nach dem erfindungsgemäßen Verfahren zellige Polyurethane hergestellt werden, dann werden Wasser und/oder leicht flüchtige organische Substanzen als Treibmittel mitverwendet. Als organische Treibmittel kommen z.B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage.

Weitere Beispiele für Treibmittel sowie Einzelheiten über die Verwendung von Treibmitteln sind im Kunststoff-Handbuch, Band VII, herausgegeben von Vieweg und Höchtlen, Carl Hanser Verlag, München 1966, z.B. auf den Seiten 108 und 109, 453 und 455 und 507 bis 510 beschrieben.

Es können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit

Le A 24 002

Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Es können ferner auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat oder Ammoniumphosphat und -polyphosphat, ferner Stabilisatoren gegen Alterungs- und Witterungseinflüsse, Weichmacher und/oder fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch

Le A 24 002

und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in den DE-OSen 2 854 384 und 2 920 501 beschrieben.

Je nach Viskosität bzw. Schmelzverhalten der Ausgangskomponenten erhält man bei Raumtemperatur gut gießbare oder rakelfähige PU-Reaktivmischungen. Diese Reaktivmischungen bestehen aus einer gegenüber dem Suspendiermedium NCO-Gruppen im Überschuß enthaltenden Komponente A), die eine heterogene Suspension eines festen, durch Polyadduktumhüllung stabilisierten Polyisocyanats in der Polyol- und/oder Polyamin-Komponente darstellt. Die Kaltverfestigung dieser Mischung erfolgt durch Zugabe der gegebenenfalls übliche Zusatzmittel wie Katalysatoren, Pigmente, Viskositätsverminderer (Lösungsmittel), Füllstoffe, Thixotropierungsmittel wie z.B. Bentonite/Propylencarbonat oder feinverteiltes Siliciumdioxid, enthaltenden Komponente B). Die Kaltverfestigung erfolgt gegebenenfalls bei Zugabe geeigneter Katalysatoren in beschleunigter Form. Die Kaltverfestigung erfolgt wahrscheinlich dadurch, daß die das feste Isocyanat schützende Polyaddukt-Umhüllung von der NCO-reaktiven Härter-Komponente B) angelöst und/oder angequollen wird und/oder dadurch, daß die Konzentration der in A) als Isocyanat-Stabilisator fungierenden aliphatischen Aminoverbindung(en) durch Verdünnen vermindert wird. Zusätzlich üben in der Polyurethan-Technologie übliche Zusatzmittel wie Pigmente, anorganische Füllstoffe, Thixotropiermittel wie z.B. Bentonite/Propylencarbonat oder

Le A 24 002

feinverteiltes Siliciumdioxid sowie Viskositätsverminderer (organische Lösungsmittel) einen die Kalthärtung der erfindungsgemäßen Zweikomponenten-PUR-Systeme beschleunigenden Einfluß aus.

Die Verarbeitung der erfindungsgemäßen Zweikomponenten-systeme richtet sich nach deren Beschaffenheit. Flüssige, bei Raumtemperatur gießbare Systeme lassen sich im Gießprozeß verarbeiten.

Die Verarbeitung kann auch im Schleuderguß erfolgen; Hohlkörper können durch Einbringung der Reaktivmasse in Formen unter Verteilung an der Oberfläche durch entsprechende Rotationsbewegungen hergestellt werden.

Bei Mitverwendung von Treibmitteln können zellige Polyurethane hergestellt werden, die gegebenenfalls eine integrale Dichtestruktur aufweisen.

Nicht mehr gießbare, aber noch verlaufende Systeme können z.B. mit einer Rakel auf gewünschte Unterlagen, z.B. textile Unterlagen wie z.B. Vliese, Gewirke und Gewebe, (Spalt)leder, Matritzen (z.B. Verloursleder-Silikon-Matritzen), oder Zwischenträger (z.B. Trennpapiere) unter Bildung von Beschichtungen oder Zurichtungen, aufgebracht werden und verfestigen nach Ablauf der Topfzeit bei Raumtemperatur.

Auch durch Tauchverfahren können Oberflächenbeschichtungen, Abdruckformen oder Formkörper hergestellt werden.

Le A 24 002

Beispiel 1

Kalthärtung mit höhermolekularen Polyolen

a) Herstellung einer lagerstabilen Suspension A)

Zu 100 Teilen eines Polyoxypropylenetherdiamins vom Molekulargewicht 2000 (Jeffamine®D-2000 der Firma Texaco) läßt
man unter intensivem Rühren 5,55 Teile 1-Isocyanato-3-isocyanatomethyl-3,5,5-trimethyl-cyclohexan zulaufen. Nach
2-stündigem Entgasen bei 90°C erhält man ein über Harnstoffgruppen vorverlängertes Polyoxypropylenetherdiamin
vom Molekulargewicht 4222 und einer Viskosität von
80 000 mPas bei 22°C.

Man setzt nun diesem vorverlängerten, aliphatischen Polyoxypropylenetherdiamin 0,17 Teile 4,4'-Diamino-3,3'-di-
methyldicyclohexylmethan als Desaktivator zu und suspendiert bei Raumtemperatur in dieser Mischung 41,42 Teile
dimeres, feinteiliges 2,4-Diisocyanatotoluol (Desmodur® TT
der Firma Bayer AG, NCO-Gehalt 24,14 %). Nach 1-stündigem
Entgasen bei 50°C erhält man eine bis 70°C lagerstabile
Suspension mit einer Viskosität von 60 000 mPas bei 22°C.
Das Äquivalentverhältnis $NCO/NH_2$ (von Diisocyanat zu
höhermolekularem Polyamin) beträgt 5,05:1.

b) Herstellung von erfindungsgemäßen Härtermischungen B)

Mit einem schnell laufenden Rührwerk (ca. 2000 U/min)
werden nacheinander die in der folgenden Tabelle angegebenen Komponenten vermischt und die Mischungen 1 h bei
50°C im Wasserstrahlvakuum entgast.

Le A 24 002

0212413

Tabelle 1

Härtermischungen B)

| | 1 | 2 | 3 | 4 |
|---|---|---|---|---|
| lineares Polyoxypropylen-glykolether-Diol vom Molgewicht 423, OHZ 265 | 100 | | | |
| lineares Polyoxypropylen-glykolether-Diol vom Molekulargewicht 1000, OHZ 112 | | 100 | | |
| lineares Polyoxypropylen-glykolether-Diol vom Molekulargewicht 1571, OHZ 71,3 | | | 100 | |
| lineares Polyoxypropylen-glykolether-Diol vom Molekulargewicht 2000, OHZ 56 | | | | 100 |
| Pb-Octoat (Octasoligen Pb 24, Fa. Borchers, Düsseldorf | 0,8 | 0,52 | 0,40 | 0,33 |
| Bentone 27® (organisch modifizierter Smektit=Schichtsilikat) der Firma Kronos Titan GmbH, Leverkusen | 12,0 | 7,8 | 6,0 | 4,9 |
| Propylencarbonat | 6,0 | 3,9 | 3,0 | 2,5 |
| Bayferrox® rot, gelb oder schwarz (Eisenoxidpigmente $Fe_2O_3$, FeO(OH), $Fe_3O_4$) der Fa. Bayer AG Leverkusen | 8,0 | 5,2 | 4,0 | 3,3 |
| Baylith® T-Pulver (Na-Alumosilikat mit 4 A Porenweite) der Fa. Bayer AG, Leverkusen | 8,0 | 5,2 | 4,0 | 3,3 |
| Aerosil®380 (pyrogene Kieselsäure) der Fa. Degussa, Hanau | 8,0 | 8,0 | 8,0 | 8,0 |

Die Härtermischung Nr. 1 ist bei Raumtemperatur pastös, Nr. 2 thixotrop-flüssig, Nr. 3 und Nr. 4 sind flüssig und nur leicht thixotrop.

Le A 24 002

c) Herstellung der kalthärtenden Mischungen aus Iso-
cyanat-Suspension A) und Härtermischung B)

Die in der folgenden Tabelle angegebenen Gew.-Teile isocyanathaltigen, lagerstabilen Suspension A) aus Beispiel
1a) und Härtermischung B) aus Beispielen 1b) werden in
einem beliebigen Mischwerk oder auch z.B. von Hand
vermischt und gegebenenfalls bei Raumtemperatur etwa 1/2 h
entgast.

Die fertigen kalthärtenden Mischungen besitzen vor der
Verfestigung die in der folgenden Tabelle mit angegebene
Konsistenz. Nach der angegebenen "Gießzeit" (Topfzeit)
beginnt eine leichte Aufdickung (durch Aufplatzen der
Schutzhülle auf dem festen Isocyanat und beginnende
Polyaddition).

Nach der angegebenen "Hautbildungszeit" beginnt eine etwa
1 cm dicke Schicht an der Oberfläche elastisch zu verfestigen. Nach der angegebenen "Durchhärtezeit" ist eine
etwa 1 cm dicke Schicht Gießmasse bei Raumtemperatur
blasenfrei elastisch verfestigt. Die Nachhärtung bei Raumtemperatur erfolgt in dem in Shore A-Einheiten angegebenen
Maß. Die mechanischen Eigenschaften von Elastomer-Prüfkörpern wurden nach Kaltverfestigung und 8-stündiger
Temperung bei 50°C bestimmt.

## Tabelle 2

| | 1 | 2 | 3 | 4 |
|---|---|---|---|---|
| Gew.-Teile Isocyanat-Suspension A) aus Beispiel 1a) | 26,14 | 26,14 | 26,14 | 26,14 |
| Gew.-Teile der Härter-Paste B)* aus Beispiel 1b | 8,92 Tl Nr. 1 | 15,42 Tl Nr. 2 | 23,30 Tl Nr. 3 | 36,14 Tl Nr. 4 |
| Konsistenz der kalthärtenden Mischung nach Herstellung und vor Verfestigungsbeginn | flüssig | leicht thixotrop | deutlich thixotrop | deutlich thixotrop |
| Gießzeit | 3 h | 8 h | 8 h | 8 h |
| Hautbildungszeit | 4 h | 10 h | 10 h | 10 h |
| Durchhärtezeit | 8 h | 16 h | 16 h | 24 h |
| Härte Shore A nach beendeter Durchhärtung: | | | | |
| 1 h | 52 | 46 | 35 | n. gem. |
| 1 Tag | 61 | 52 | 36 | 19 |
| 1 Woche          bei Raum- | 70 | 65 | 55 | 29 |
| 2 Wochen       temperatur | 76 | 73 | 67 | 42 |
| 4 Wochen          (RT) | 77 | 75 | 72 | 54 |
| mechanische Werte nach 1 Tag RT und 8 h 50°C: | | | | |
| Zugfestigkeit (MPa) DIN 53 504 | 3,0 | 2,8 | 2,0 | 0,5 |
| Reißdehnung (%) DIN 53 504 | 400 | 400 | 300 | 50 |
| Weiterreißfestigkeit (kN/m) DIN 53 515 | 18 | 16 | 14 | 4 |
| Shore Härte A DIN 53 505 | 78 | 72 | 69 | 52 |
| Elastizität DIN 53 512 | 31 | 31 | 28 | n. gem. |
| *) OH/NH₂-Äquivalent-verhältnis | 3,33 | 2,66 | 2,66 | 3,33 |
| NCO-Kennzahl | 117 | 138 | 138 | 127 |

(NCO/NH$_2$-Äquivalent-Verhältnis 5,05:1)

0212413

Beispiel 2 Kalthärtung mit niedermolekularen Glykolen

Zu 75 Teilen des vorverlängerten aliphatischen Polyoxypropylenetherdiamins aus Beispiel 1 werden 0,16 Teile 4,4'-Diamino-3,3'-dimethyldicyclohexylmethan zugesetzt und in dieser Mischung bei Raumtemperatur mit einem Schnellrührer 29,43 Teile Desmodur® TT suspendiert. Nach 1-stündigem Entgasen bei 50°C erhält man eine bis 68°C lagerstabile, pastenartige TT-Suspension mit einer Viskosität von 60 000 mPas bei 22°C.

Zu jeweils 26,14 Teilen der soeben beschriebenen Desmodur® TT-Suspension werden die im folgenden aufgelisteten Glykole und Katalysatoren bei Raumtemperatur zugemischt und die Härtung der Mischungen bei Raumtemperatur beobachtet.

Le A 24 002

**Tabelle 3**

| Tl TT-Paste | Härter-Paste | | Katalysator | | Verfestigungszeit | Härte Shore A nach | |
|---|---|---|---|---|---|---|---|
| | Tl Glykol* | Tl Aerosil 380 | Pb-Octoat | Sn-Octoat | bei Raumtemperatur | 3 d RT | 8 h 50°C |
| 26,14 | 2,65 Tri-propylen-glykol | 0,78 | 0,03 | | 24 h | 64 | 92 |
| 26,14 | " " | 0,78 | | 0,05 | 8 h | 64 | 93 |
| 26,14 | 1,85 Di-propylen-glykol | 0,78 | 0,03 | | 24 h | 65 | 85 |
| 26,14 | " " | 0,78 | | 0,05 | 8 h | 65 | 90 |
| 26,14 | 1,02 Pro-pylen-glykol | 0,78 | 0,03 | | 24 h | 64 | 88 |
| 26,14 | " " | 0,78 | | 0,05 | 8 h | 68 | 90 |
| 26,14 | 1,46 Di-ethylen-glykol | 0,78 | 0,03 | | 8 h | 60 | 74 |
| 26,14 | " " | 0,78 | | 0,05 | 3 h | 62 | 84 |
| 26,14 | 0,86 Ethylen-glykol | 0,78 | 0,03 | | 24 h | 67 | 80 |
| 26,14 | " " | 0,78 | | 0,05 | 8 h | 68 | 83 |
| 26,14 | 1,24 Butan-diol-1,4 | 0,78 | 0,03 | | 30 h | 65 | 86 |
| 26,14 | " " | 0,78 | | 0,05 | 8 h | 66 | 84 |

Die Festigkeit von gegossenen Filmen ist nach Handbeurteilung gut. Die Bruchdehnungen liegen alle zwischen 300 und 400 %.

*) OH/NH$_2$-Äquivalentverhältnis = 3,1:1 bei allen Glykolen
   NCO-Kennzahl = 121 bei allen Ansätzen

Vermischt man alle zur Herstellung einer kalthärtenden Mischung notwendigen Komponenten auf ein Mal, so kann eine wesentlich kürzere Topfzeit resultieren (Beispiel 3 und Vergleichsbeispiel 4 zu Beispiel 3).

Beispiel 3 (Vergleichsbeispiel - Vermischung aller Reaktionskomponenten)

In einer Mischung aus 75 Teilen des vorverlängerten Polyoxypropylenetherdiamins aus Beispiel 1, 0,12 Teile Laromin, 47,28 Teile Polyoxypropylenetherdiol vom Molekulargewicht 1000, 0,8 Teile Pb-Octoat und 7,08 Teile Aerosil 380 werden 29,43 Teile Desmodur® TT suspendiert. Die Mischung verfestigt bereits nach 1,5 h bei Raumtemperatur zu einem Elastomer der Härte 44 Shore A. Nach 48-stündigem Nachtempern bei 50°C beträgt die Härte 76 Shore A, die Bruchdehnung 400 %.

Beispiel 4 (erfindungsgemäß - Vermischung der vorgebildeten Komponente A mit Komponente B)

Zu 75 Teilen des vorverlängerten aliphatischen Polyoxypropylenetherdiamins aus Beispiel 1 werden 0,12 Teile 4,4'-Diamino-3,3'-dimethyldicyclohexylmethan zugesetzt und in dieser Mischung bei Raumtemperatur mit einem Schnellrührer 29,43 Teile Desmodur® TT suspendiert. Nach 1-stündigem Entgasen bei 50°C erhält man eine bis 62°C lagerstabile, pastenartige Desmodur® TT-Suspension (Komponente A) mit einer Viskosität von 60 000 mPas bei 22°C.

Zu der soeben beschriebenen Desmodur® TT-Suspension A) wird eine Härter-Paste B) aus 47,28 Teilen Polyoxypro-

Le A 24 002

- 34 -

0212413

pylenetherdiol vom Molekulargewicht 1000, 0,8 Teile Pb-Octoat und 7,08 Teile Aerosil 380 zugemischt. Nach einer Topfzeit von 12 h verfestigt die Mischung zu einem Elastomer mit denselben mechanischen Eigenschaften wie in Beispiel 3.

Beispiel 5

Nachweis des härtenden Einflusses der Luftfeuchtigkeit

5 Glasflaschen werden jeweils etwa 1 cm hoch mit der Desmodur® TT-Suspension A) aus Beispiel 4 gefüllt. Flasche Nr. 1 wird zugeschraubt. In Nr. 2 wird ein kleines, offenes Gefäß mit etwas Wasser dazugestellt und die Flasche zugeschraubt. In Nr. 3 wird ein kleines, offenes Gefäß mit Wasser und festem $CO_2$ dazugestellt und die Flasche lose zugeschraubt. In Nr. 4 wird ein nur mit festem $CO_2$ gefülltes Gefäß dazugestellt und die Flasche lose zugeschraubt. Nr. 5 wird offen stehen gelassen.

Le A 24 002

| TT-Paste Lagerversuch-Nr. | Gasphase über der Paste angereichert mit | Verfestigung der Paste innerhalb |
|---|---|---|
| 1 | geschlossene Flasche, ohne Zusatz | 2 Monaten |
| 2 | $H_2O$ | über Nacht |
| 3 | $H_2O + CO_2$ | über Nacht |
| 4 | $CO_2$ | 2 Monaten |
| 5 | offene Flasche, d.h. Atmosphären-einfluß | 1 Woche |

Man erkennt also eindeutig, daß außer den nieder- und höhermolekularen Polyolen auch Wasserdampf aus der Luft eine, wenn auch langsamere Kalthärtung als bei Verwendung von Polyolen hervorruft.

**Beispiel 6**

**Kalthärtende Mischung mit nur 30 min Topfzeit**

Gibt man zu 26,14 Teilen der Desmodur® TT-Suspension aus Beispiel 4 eine Härterpaste aus 1,46 Teilen Diethylenglykol, 1,66 Teilen Aerosil 380 und 0,05 Teilen Sn-Octoat, so resultiert nach einer Topf- und Verfestigungszeit von 30 min ein Elastomer der Härte 61 Shore A, welches nach einigen Wochen bei Raumtemperatur oder nach 8 h bei 50°C auf 86 Shore A nachgehärtet und eine Bruchdehnung von 300 % aufweist ($NCO/NH_2$-Äquivalentverhältnis = 5,05:1; $OH/NH_2$-Äquivalentverhältnis = 3,1:1; NCO-Kennzahl = 123).

**Beispiel 7**

**Kalthärtende Mischung mit nur 10 min Topfzeit und mit TDI-Harnstoff als Isocyanat-komponente**

In einer Mischung aus 20 Teilen eines Polyoxypropylenethertriamins vom Molekulargewicht 5250 und 0,11 Teilen 4,4'-Diamino-3,3'-dimethyldicyclohexylmethan werden 17,29 Teile eines TDI-Harnstoffs (3,3'-Diisocyanato-4,4'-dimethyl-N,N'-diphenylharnstoff) mit 24,3 % NCO-Gehalt suspendiert. Nach 1-stündigem Entgasen erhält man eine gut verarbeitbare, leicht thixotrope, sedimentationsstabile und bis 70°C auch chemisch stabile, pastenartige Isocyanat-Suspension A).

Als Härter-Paste B) für diese Isocyanat-Suspension A) eignet sich eine in einem geeigneten Mischaggregat

Le A 24 002

(Vakuumkneter) hergestellte Mischung aus 10 Teilen Polyoxypropylenethertriamin vom Molekulargewicht 5250, 10 Teile eines Addukts aus 1 Mol Trimethylolpropan und 3,77 Mol Ethylenoxid mit einem mittleren Molekulargewicht von 300, und 10 Teile Aerosil OX 50 (pyrogene Kieselsäure)der Fa. Degussa.

Nach Vermischen der Isocyanatpaste und Härterpaste tritt ohne merkliche Eigenerwärmung nach einer Topfzeit von etwa 7 bis 10 min rasch Verfestigung zu einem Elastomer der Härte 85 Shore A ein. Die Härte steigt innerhalb 1 Woche noch auf etwa 91 Shore A an. Die Bruchdehnung eines Films beträgt 300 %.

Le A 24 002

Patentansprüche

1. Kalthärtende Zusammensetzungen, enthaltend
A) bis 85° lagerstabile Suspensionen fester Polyisocyanate in höhermolekularen aliphatischen Polyaminen
mit Molekulargewichten von 400 bis 8000, gegebenenfalls in Anwesenheit von aliphatischen Polyaminen mit
Molekulargewichten von 32 bis 399 und/oder untergeordneten Mengen an Polyolen mit Molekulargewichten
von 62 bis 8000, wobei die Reaktivität des
Polyisocyanats durch Einwirkung der oben genannten,
als "Desaktivatoren" wirksamen Polyamine und/oder
durch Einwirkung von Hydrazingruppen aufweisenden
Verbindungen und/oder Amidinen und/oder Guanidinen
in einer Menge von 0,1 bis 25 Äquivalent-% Amin,
Hydrazin, Alkylhydrazinen, Hydrazidverbindungen,
Guanidinen oder Amidinen oder ihren Mischungen pro
NCO, herabgesetzt worden ist,

und B) Polyhydroxylverbindungen mit Molekulargewichten von 62 bis 8000, und/oder Wasser und gegebenenfalls aliphatische Polyamine mit Molekulargewichten von 32 bis 8000 sowie gegebenenfalls zusätzliche,
aktivierend wirkende Stoffe.

2. Zusammensetzungen nach Anspruch 1, dadurch gekennzeichnet, daß die Komponente A) eine Suspension eines
desaktivierten dimeren Toluylendiisocyanats oder
eines desaktivierten 3,3'-Diisocyanato-4,4'-dimethyl-
N,N'-diphenylharnstoffs darstellt.

Le A 24 002

3. Zusammensetzungen nach Ansprüchen 1 und 2, dadurch gekennzeichnet, daß die Komponente B) eine Polyhydroxylverbindung vom Molekulargewicht 62 bis 1000 darstellt.

4. Zusammensetzungen nach Ansprüchen 1 und 2, dadurch gekennzeichnet, daß die Komponente B) ein Prepolymer auf Basis von mindestens bifunktionellen Verbindungen mit gegenüber NCO reaktiven Gruppen und unterschüssigen molaren Mengen an Di- und/oder Polyisocyanaten darstellt.

5. Zusammensetzungen nach Ansprüchen 1 bis 4, dadurch gekennzeichnet, daß die Komponente B) zusätzlich Feststoff-Adsorbentien, vorzugsweise Zeolithe, feinverteilte Kieselsäure, anorganische Pigmente, Bentonite oder übliche Füllstoffe enthält.

6. Zusammensetzungen nach Ansprüchen 1 bis 5, dadurch gekennzeichnet, daß die Komponente (B) zusätzlich übliche PUR-Katalysatoren enthält.

7. Zusammensetzungen nach Ansprüchen 1 bis 6, dadurch gekennzeichnet, daß die Komponente B) zusätzlich polare Lösungsmittel enthält.

8. Zusammensetzungen nach Ansprüchen 1 bis 7, dadurch gekennzeichnet, daß in den Komponenten A) und B) Polyisocyanate und NCO-reaktive Verbindungen in solchen Mengen enthalten sind, daß eine NCO-Kennzahl von 50 bis 200, vorzugsweise 90 bis 135 eingehalten wird.

Le A 24 002

9. Verfahren zur Herstellung von kalthärtenden Zusammensetzungen gemäß Ansprüchen 1 bis 8, dadurch gekennzeichnet, daß man

A) bis 85°C lagerstabilen Suspensionen fester Polyisocyanate in höhermolekularen aliphatischen Polyaminen mit Molekulargewichten von 400 bis 8000, gegebenenfalls in Anwesenheit von aliphatischen Polyaminen mit Molekulargwichten von 32 bis 399 und/oder untergeordneten Mengen an Polyolen mit Molekulargewichten von 62 bis 8000, wobei die Reaktivität des Polyisocyanats durch Einwirkung der oben genannten als "Desaktivatoren" wirksamen Polyamine und/oder durch Einwirkung von Hydrazingruppen aufweisenden Verbindungen und/oder Amidinen und/oder Guanidinen in einer Menge von 0,1 bis 25 Äquivalent-% Amin, Hydrazin, Alkylhydrazinen, Hydrazidverbindungen, Guanidinen oder Amidinen oder ihren Mischungen pro NCO, herabgesetzt worden ist,

B) Polyhydroxylverbindungen mit Molekulargewichten von 62 bis 8000 und/oder Wasser und gegebenenfalls aliphatische Polyamine mit Molekulargewichten von 32 bis 8000 und gegebenenfalls zusätzliche, aktivierend wirkende Stoffe bei Temperaturen unterhalb der Schmelztemperatur der Polyisocyanate, bevorzugt bei Temperaturen zwischen 0 und 50°C,

zusetzt.

Le A 24 002

10. Verwendung der kalthärtenden Zusammensetzungen gemäß Ansprüchen 1 bis 8 zur Herstellung von Polyurethan-(harnstoff)en durch Aushärten bei Temperaturen zwischen 0 und $50^{0}$ C, vorzugsweise Raumtemperatur, gegebenenfalls unter Formgebung.

Le A 24 002